# EUROPEAN PATENT SPECIFICATION

(11) **EP 0 844 170 B1**
(45) Date of publication and mention of the grant of the patent: **19.11.2003**
(21) Application number: 97120428.4
(22) Date of filing: 21.11.1997
(51) Int. Cl.: B62M 23/02

(54) **Reduction device for vehicle assisted by electric motor power**
Untersetzungsgetriebe für ein Fahrzeug mit elektrischem Hilfsmotor
Mécanisme réducteur pour un véhicule assisté par un moteur électrique

(30) Priority: 26.11.1996 JP 31457296
(43) Date of publication of application: 27.05.1998
(73) Proprietor: MATSUSHITA ELECTRIC INDUSTRIAL CO., LTD., Kadoma-shi, Osaka-fu (JP)
(72) Inventor: Wada, Masami, Takefu-shi, Fukui-ken 915 (JP); Ueda, Takemi, Takefu-shi, Fukui-ken 915 (JP); Miyawaki, Toshiharu, Takefu-shi, Fukui-ken 915 (JP); Kamada, Yasushi, Takefu-shi, Fukui-ken 915 (JP)
(74) Representative: Eisenführ, Speiser & Partner

(56) References cited:
- EP-A- 0 336 207
- EP-A- 0 736 449
- EP-A- 0 739 812
- FR-A- 2 302 231
- US-A- 4 944 196

## Description

### BACKGROUND OF THE INVENTION

### Field of the Invention

The present invention generally relates to a motor drive mechanism having a reduction device, in particular a reduction device for use in a vehicle assisted by an electric motor power (referred to as "motor-assisted vehicle" hereinafter) having a motor drive mechanism in which a motor power of an electric motor is varied in accordance with a human power load to thereby assist a human power within a given power range by way of detecting a travelling speed of the motor-assisted vehicle.

### Description of the Prior Art

Conventionally, there have been proposed various types of motor-assisted vehicles such as, e.g., motor-assisted bicycles. A conventional motor-assisted bicycle utilizes a motor drive power together with a human drive power in combination by providing a motor drive mechanism as well as a human drive mechanism in parallel to each other to thereby assist a human power by an electric motor power within a given range in accordance with a value of a human pedalling load. In such a conventional motor-assisted bicycle, however, the assist range of the motor power to the human power must be controlled in accordance with the vehicle speed. That is, the motor power assist rate is fixed to, for example, 50 % when the vehicle speed is in a first low range of 0 to 15 km/h, and is gradually reduced from 50% to 0% in accordance with increase of the vehicle speed when the vehicle speed is in a second range of 15 km/h to 24 km/h, and is fixed to 0 % when the vehicle speed is in a third range of 24 km/h or higher.

In this construction, the motor drive mechanism has an electric motor, reduction device, pedal load detector for detecting a human pedalling load, speed sensor for detecting a vehicle speed, and a control unit. The control unit includes a microcomputer which decides a driving condition of the electric motor based on the data of the human pedalling load obtained by the pedal load detector and the vehicle speed obtained by the speed sensor to thereby control the motor drive power within the range as mentioned above.

Moreover, it is desired that a motor drive mechanism for use in a motor-assisted vehicle should be as small as possible in size and weight in consideration of a purpose of assisting a human power drive by a motor power. In order to attain this requirement, there have been developed and suggested various types of reduction devices in combination with electric motors for a motor drive mechanism.

For example, in JP 305478/1994 A, a cylindrical d.c. motor in combination with three-stage gear type reduction device is disclosed. In this construction, however, there is inherently involved a problem that a large noise generation can not be avoided due to engagement contact between a motor shaft gear and a first stage gear of the reduction device which are rotated at a high speed. This is because the gears for use in the reduction device are made of a metallic material such as, for example, SCM415 and the like in view of securing reliability in mechanical strength. In order to suppress the noise generation due to the metallic gear, an improved shape of the gear, removal of burr at a cog edge and selection of grease are taken into consideration, but these improvements are insufficient because there is a limitation on account of economical and other reasons.

As another conventional example, in the disclosure JP 95744/1995 A, a planetary roller type reduction device is used for the first stage reduction in connection with an electric motor, where a planetary roller is interposed between a motor shaft and an outer wheel while the motor is aligned with the reduction device to thereby improve the fitting accuracy by reducing the number of the fitting points. According to this method, although the noise can be effectively suppressed, there arises another problem that the reduction device is undesirable increased in weight and cost.

EP 0 736 449 A2 representing the closet prior art from which the invention proceeds discloses a power assist apparatus of a power assisted bicycle which apparatus comprises a crank shaft to be driven for rotation by a pedaling force, an electric motor for generating an assisting power, a force composition device for composing the pedaling force and the assisting power to output a composed force thereof to a driving wheel side and at the same time for generating two thrust component forces having magnitude proportional to pedaling force and assisting power, a thrust component force magnitude difference detection means for detecting the difference in magnitude between the two thrust component forces, and a control means for controlling an output of the electric motor so as to bring the difference in magnitude between the two thrust component forces to "0" and to an optional magnitude difference based on an input from the thrust component force magnitude difference detection means.

Further, EP 0 739 812 A2 discloses a power assist apparatus of a power assisted bicycle which apparatus comprises a crank shaft extending in the transverse direction of the body of the bicycle and rotatably driven by a footpedal-propelling, an electric motor for generating an assist power, a power composition shaft rotatably supported and extending in parallel with the crank shaft, a footpedal-propelling power transmission mechanism for transmitting the footpedal-propelling power to the power composition shaft at a right angle to the axis of the power composition shaft, an assist power transmission mechanism for transmitting the assist power to the power composition shaft at a right angel to the axis of the power composition shaft in the direction opposite to the direction in which the footpedal-propelling power is transmitted, a power composition output mechanism for outputting the rotating power of the power composition shaft to a driven wheel, a moment sensor for sensing a moment difference between two moments acting on the power composition shaft from two opposite directions when the footpedal-propelling power and the assist power are transmitted, and a control unit for calculating the assist ratio of the assist power to the footpedal-propelling power based on the magnitude and direction of the moment difference coming in from the moment sensor and controlling the output of the electric motor so that the assist ratio is kept constant.

In order to provide a pleasant motor-assisted vehicle, it is indispensably required to have a small-sized, light in weight reduction device with high reliability in mechanical strength while suppressing the noise.

### SUMMARY OF THE INVENTION

Thus, an essential objective of the present invention is to provide an improved motor drive mechanism having a reduction device for a motor-assisted vehicle, with reduction in weight and suppression of noises at a low cost, by making one or more reduction gears with a synthetic resin composite material which the reduction gears are rotated at a high speed.

In order to achieve the above mentioned and further objects, according to the present invention, there is provided a motor drive mechanism having a reduction device in combination with a motor for use in a vehicle assisted by a motor drive power of the motor wherein the motor drive power is added to a human drive power to assist a human power, wherein said motor includes a motor power output shaft having a first gear integrally formed thereon, and said reduction device includes a first common shaft having a second gear and a third gear in common, and a second common shaft having a fourth gear and a fifth gear in common, wherein the second gear is engaged with the fifth gear while the third gear is engaged with the fourth gear, characterized in that at least one of the second and fourth gears is made of a synthetic resin composite material which is added with a glass fiber material wherein an additive amount of the glass fiber is within a range of 30 to 55 % in weight.

By this arrangement, since the second and/or fourth gear is made of synthetic resin composite material which is added with a specific glass fiber material, the noise generation in the motor drive mechanism can be effectively suppressed with reduction in weight. Further, the mechanical strength of the synthetic resin gear is improved, and the resultant produced gear of the synthetic resin composite material has a good durability for use in a large load. Moreover, a sufficient mechanical strength can be obtained along with good molding property when performing an injection-molding of the gear.

FR 2 302 231 discloses a reduction device having gears made of a synthetic resin material. However, this prior art does not suggest to add the synthetic resin composite material with a specific glass fiber material according to the teaching of the present invention.

Preferably, the glass fibers added to the synthetic resin material are aligned in parallel to each tooth surface of the gear. By this arrangement, since the glass fibers are spread covering over the tooth surface in alignment, there can be obtained a sufficient durability especially against the friction due to the engagement with the first gear.

Further advantageous embodiments are defined in the dependent claims.

### BRIEF DESCRIPTION OF THE DRAWINGS

These and other objects and features of the present invention will become apparent from the following description taken in conjunction with the preferred embodiment thereof with reference to the accompanying drawings, in which:
Fig. 1 is a schematic view of a motor-assisted bicycle according to an embodiment of the present invention;
Fig. 2 is a block diagram of a drive mechanism in a motor-assisted bicycle of the present embodiment;
Fig. 3 is a sectional view of a motor drive mechanism according to the present invention;
Fig. 4 is a schematic block view showing a gear engagement model of a reduction device of the present embodiment;
Fig. 5 is a graph showing a relationship between a mechanical strength of a synthetic resin composite material used for a gear and a glass fiber additive amount thereof;
Fig. 6 is a schematic view showing a configuration of a reduction gear according to the present invention;
Fig. 7 is a schematic view showing an embodiment of the reduction gear with longer-sized glass fiber additives aligned; and
Fig. 8 is a schematic view showing another embodiment of the reduction gear with longer-sized glass fiber additives aligned.

### DETAILED DESCRIPTION OF THE PREFERRED EMBODIMENTS

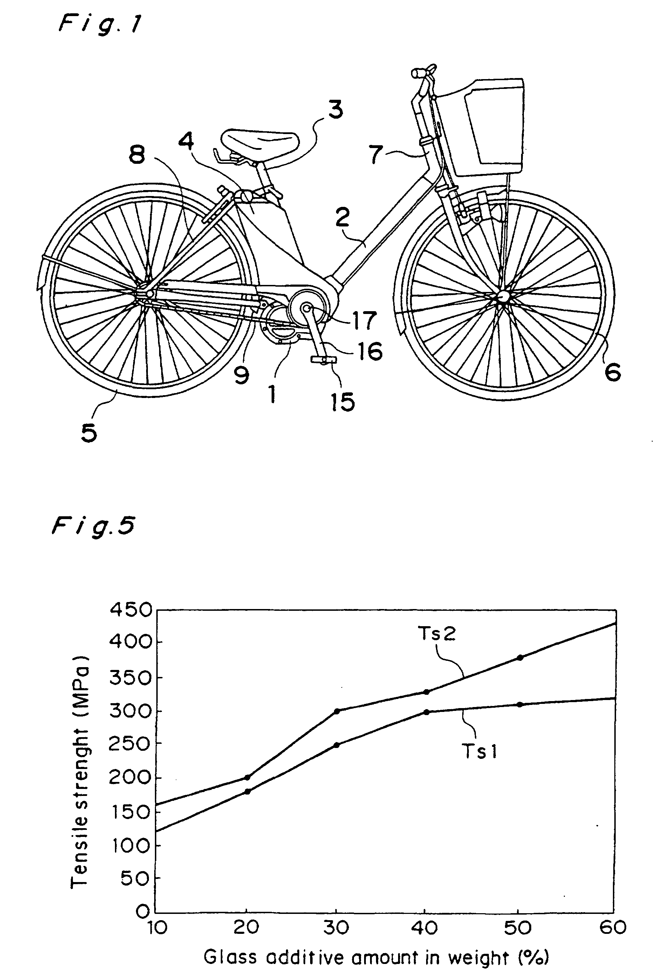

The following describes a preferred embodiment of the present invention with reference to Figs. 1 through 8.

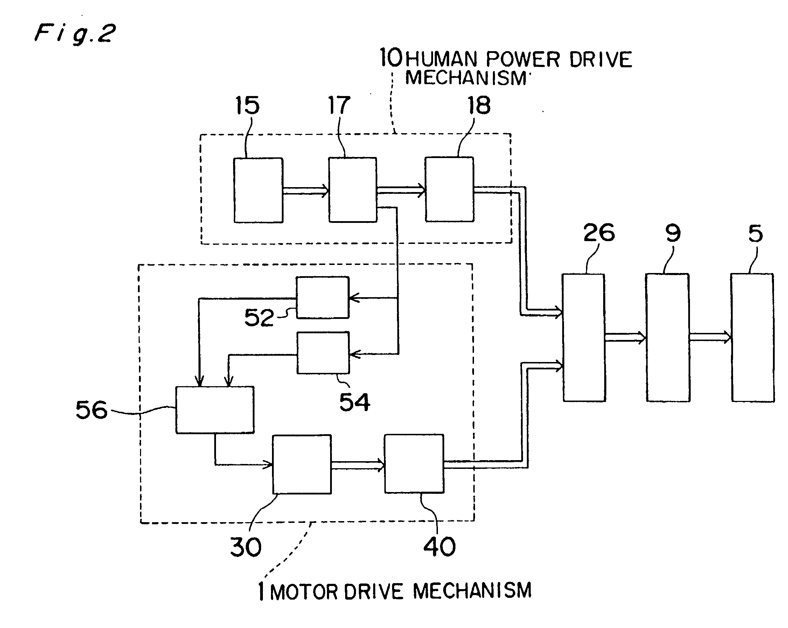

Fig. 1 shows a schematic construction of a motor-assisted bicycle having a frame body, rear-wheel 5 and front-wheel 6. The frame body includes a main frame pipe 2 extending downward with inclination from a head pipe 7 toward a crank shaft 17. The crank shaft 17 has a pair of pedal units 15 coupled to the end portions thereof by way of pedal arm cranks 16 to thereby constitute a human power drive mechanism 10 (see Fig. 2). A saddle pipe 3 serving as a seat post rises upward from the crank shaft portion 17. A sub-frame 8 extends from a rear-wheel shaft portion and coupled to an upper intermediate portion of the saddle pipe 3, where a lower-most portion of the frame pipe 2 and a lower-most portion of the saddle pipe 3 are coupled to each other in the vicinity of the crank shaft portion.

In this construction, a motor drive mechanism 1 is mounted on a frame body portion beside the crank shaft portion beneath the saddle pipe 3. A charge-type battery 4 is provided in a battery housing located between the saddle pipe 3 and the rear wheel 5 below the sub-frame 8, which the charge-type battery 4 is electrically connected to the motor drive mechanism 1 by means of a harness member (not shown) for supplying an electric power to the motor drive mechanism 1. Thus, the human power drive mechanism 10 in combination with the motor drive mechanism 1 constitutes a drive mechanism of the motor-assisted bicycle. By this arrangement, when a human drive power is applied to the crank shaft 17 by way of the pedal unit 15, a motor power is generated in the motor drive mechanism 1 for assisting the human drive power.

Fig. 2 shows a block construction of the drive mechanism in the motor-assisted bicycle, which is comprised of the human power drive mechanism 10 and motor drive mechanism 1.

In the human power drive mechanism 10, the human drive power applied on the pedal unit 15 is transmitted to the crank shaft 17 of which the output power thereof is transmitted to an internal gear 26 via a planet (or epicyclic) gear 18. The rotational power of the internal gear 26 is transmitted to the rear wheel 5 by way of a chain means 9 via a freewheel (not shown) serving as a one-way clutch.

In the meanwhile, the motor drive mechanism 1 includes an electric motor 30, reduction device 40, pedal load detector 52, vehicle speed sensor 54 and control unit 56. In this construction, the output of the crank shaft 17 is electrically connected to the control unit 56 via the pedal load detector 52 and the vehicle speed sensor 54 in parallel to thereby detects a human pedalling load and vehicle travelling speed.

The control unit 56 includes a microcomputer (not shown) which decides a driving condition of the electric motor 30 based on the data of the human pedalling load obtained by the pedal load detector 52 and the vehicle speed obtained by the vehicle speed sensor 54 to thereby control the motor drive power within a given range. The motor drive power generated by the electric motor 30 is transmitted to the reduction device 40 of which the output power reduced in rotational speed is transmitted to the internal gear 26 on which the motor drive power is combined with the human drive power. The combined rotational power is transmitted to the rear wheel 5 by way of the chain means 9.

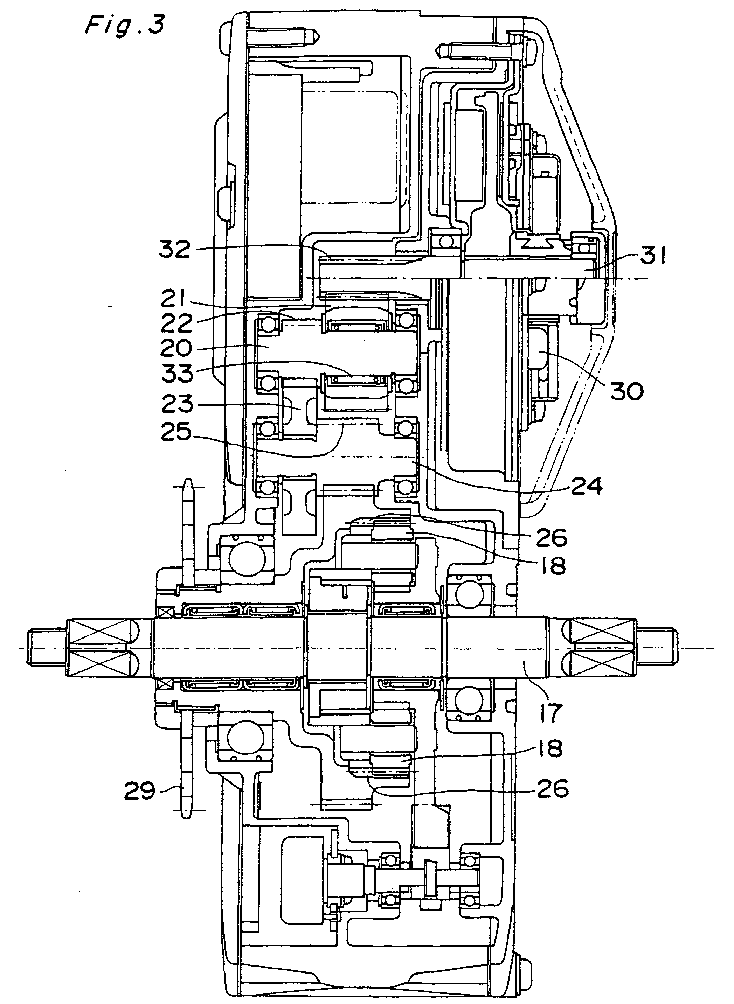

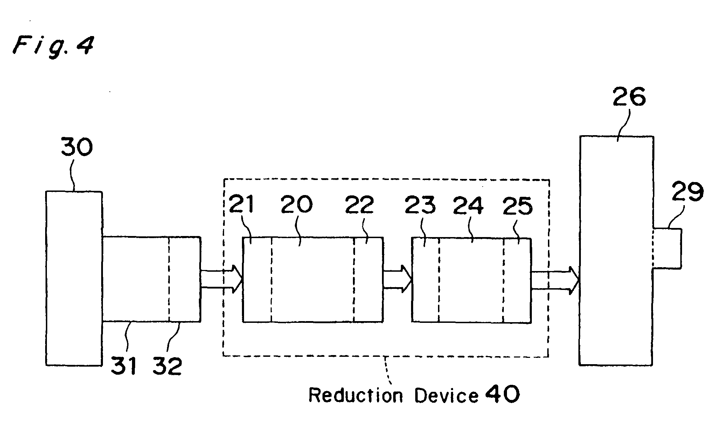

Fig. 3 shows an example of a construction of the motor drive mechanism 1, and Fig. 4 shows a gear engagement model of the reduction device 40.

As shown in Figs. 3 and 4, the electric motor 30 is of a d.c. flat type having an output shaft 31 while the reduction device 40 includes a first common shaft 20 having a second gear 21 and third gear 22 in common and further includes a second common shaft 24 having fourth gear 23 and fifth gear 25 in common. The output shaft 31 of the motor 30 has a first gear 32 integrally formed on the tip portion thereof which the first gear 32 is engaged with the second gear 21 formed on the first common shaft 20 of the reduction device 40 for performing a first stage reduction. The second gear 21 is supported by the first common shaft 20 via a roller clutch 33 which is interposed between the second gear 21 and the first shaft 20 in order to transfer a torque only in one direction.

The first common shaft 20 has the third gear 22 integrally formed on the peripheral surface thereof which the third gear 22 is engaged with the fourth gear 23 integrally formed on the second common shaft 24 of the reduction device 40 to thereby transfer the torque to the internal gear 26 via the fifth gear 25.

In a process of manufacturing the reduction device of the present embodiment, the second gear 21 of the first shaft 20 is produced by injection-molding using a synthetic resin material such as, for example, a polyamide resin composite material with a glass fiber material of, e.g., 35% in weight added thereto.

By this arrangement, the output torque of the electric motor 30 is transferred from the first gear 32 formed on the output shaft 31 to the second gear 21 made of synthetic resin composite material. Since the second gear 21 and third gear 22 are formed on the common shaft 20 while the fourth gear 23 of the second common shaft 24 is engaged with the third gear 22, therefore the output torque is transferred from the second gear 21 to the fourth gear 23 via the third gear 22.

In this construction, since the second gear 21 is made of synthetic resin composite material, the noise generation in the motor drive mechanism can be sufficiently suppressed with reduction in weight.

In a preferred embodiment, the fourth gear 23 of the second common shaft 24 may be also made of a synthetic resin composite material, so that the effect of reducing the noise and weight can be further attained. The second common shaft 24 having the fourth gear 23 is also integrally formed with the fifth gear 25 which is engaged with the internal gear 26. Thus, the output torque of the motor 30 is transferred to the internal gear 26.

In the meanwhile, as shown in Fig. 2, the human pedalling power is transferred to the internal gear 26 via the crank shaft 17 and via the planet gear 18 so as to be combined with the torque transferred from the motor 30. The internal gear 26 is integrally formed on a sprocket wheel 29, and the resultant combined torque of the human pedalling power and the motor drive power is transferred from the internal gear 26 to the rear wheel 5 via the sprocket 29 and via the chain 9.

The glass fiber material added to the synthetic resin material for injection-molding of the second and/or fourth gears 21 and 23 usually has a length of 2 to 3 mm when using a short-sized glass fiber, alternatively has a length of generally 8 mm or more when using a longer-sized glass fiber.

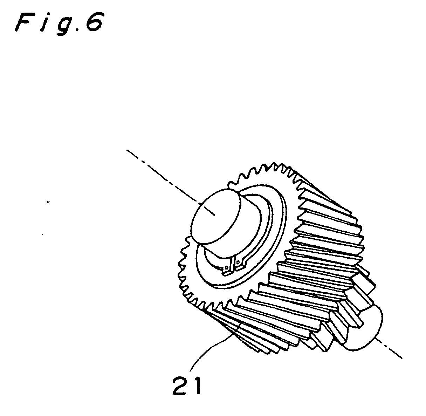

Fig. 5 shows a relationship between a mechanical strength of the synthetic resin composite material and an additive amount of the glass fiber material in weight %, where a tensile strength (MPa) is taken as the mechanical strength, and wherein Ts1 represents the short-sized glass fiber while Ts2 represents the longer-sized glass fiber.

As shown in Fig. 5, in the case of using the short-sized glass fiber Ts1, the tensile strength is more improved as the additive amount of the glass fiber is increased, and is saturated when the additive amount is 35% or more in weight. However, when the additive amount of the glass fiber is excessively increased, the molding property at the time of injection-molding of the synthetic material is deteriorated, and therefore a preferable additive amount of the glass fiber ranges from 30 to 35% in weight for practical use.

While in the case of using the longer-sized glass fiber Ts2, the tensile strength is increased generally in proportion to the additive amount of the glass fiber material without a saturation point. Therefore, it is more desirable to have an additive amount as large as possible within a range securing the molding property.

In the inventor's study and experiment, it was found that good productivity of the longer-sized glass fiber Ts2 can be obtained for practical use so long as the molding process is securely performed by taking a contrivance in the molding process, e.g., by providing a larger molding gate area for obtaining a good flowability of the mold. Also, it was found that the mechanical strength thereof after subjecting to the molding process can be further improved in comparison to that of the short-sized glass fiber Ts1.

According to the inventor's experiment, a sufficient mechanical strength can be obtained with good molding property when the additive amount of the longer-sized glass fiber is within a range of 30 to 55% in weight.

In particular, when the molded gear product of the synthetic resin added with the glass fiber material is used in combination with a metallic part such as a bearing and the like, a good thermal expansion property and other mechanical property can be obtained in a degree approximately equal to those of a metallic material.

Fig. 6 shows an example of a construction of the second gear 21 made of the synthetic resin composite material formed on the first common shaft 20 for the first reduction stage.

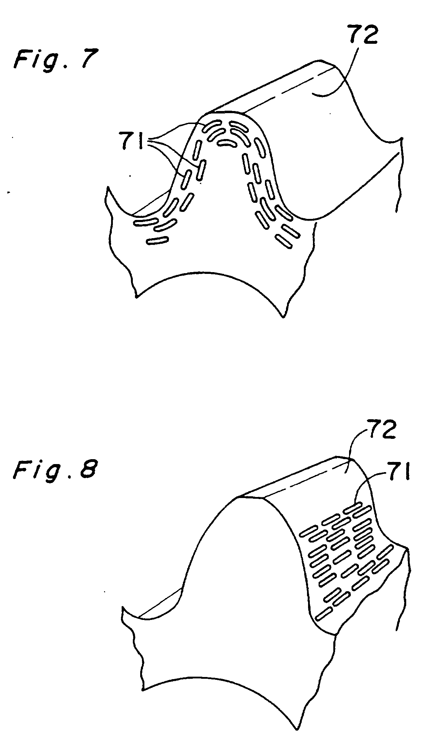

In a preferred embodiment, as shown in Fig. 7, the longer-sized glass fiber additives 71 are aligned in parallel to each tooth surface 72 of the gear to thereby further improve the mechanical strength, especially friction-proof property. Thus, the resultant produced gear of the synthetic resin composite material has a good durability for use with a large load and can be applied to the gears for the second reduction stage or downstream stages therefrom having a high torque in speed reduction. Also, a root portion of the gear has a good mechanical strength in a degree similar to that of the conventional metallic one, to be advantageous.

In another preferred embodiment, as shown in Fig. 8, the longer-sized glass fiber additives 71 are aligned in parallel to a widthwise direction of each tooth surface 72 of the gear. In this arrangement, since the glass fibers are spread covering over the tooth surface in alignment, there can be obtained a sufficient durability against the friction due to the engagement with the first gear 32 of the motor output shaft while suppressing the noise generation at the same time.

It is noted that, although a polyamide resin material is used as a synthetic resin composite material in this embodiment, it is not limited to this material and other synthetic resin material such as polypropylene resin or the like materials having a good grease-proof property can be also used.

As described above, according to the reduction device of the present invention, a part of the gears rotating at a high speed is made of a synthetic resin composite material added with a glass fiber material to thereby realize the reduction in weight at a low cost with suppression of the noise generation, and thus providing a pleasant motor-assisted vehicle. These effects of the present invention can be utilized to a wide field of a machinery mechanism using a gear reduction device.

## Claims

1. A motor drive mechanism (1) having a reduction device (40) in combination with a motor (30) for use in a vehicle assisted by a motor drive power of the motor (30) wherein the motor drive power is added to a human drive power to assist a human power, wherein
said motor (30) includes a motor power output shaft (31) having a first gear (32) integrally formed thereon, and
said reduction device (40) includes a first common shaft (20) having a second gear (21) and a third gear (22) in common, and a second common shaft (24) having a fourth gear (23) and a fifth gear (25) in common, wherein the second gear (21) is engaged with the fifth gear (32) while the third gear (22) is engaged with the fourth gear (23),
**characterized in that** at least one of the second and fourth gears (21, 23) is made of a synthetic resin composite material which is added with a glass fiber material wherein an additive amount of the glass fiber is within a range of 30 to 55 % in weight.

2. The motor drive mechanism as claimed in claim 1, which is adapted for use in a vehicle assisted by the motor drive power which is varied in accordance with the human drive power to thereby assist the human drive power within a given power range.

3. The motor drive mechanism as claimed in claim 1 or 2,
further comprising a human power drive mechanism (10) for transmitting the human drive power and a motor drive mechanism (1) for transmitting the motor drive power to the target wheel.

4. The motor drive mechanism as claimed in claim 3, wherein said human power drive mechanism (10) comprises a pedal load unit (15) and a crank shaft (17) while said motor drive mechanism (1) further comprises a pedal load detector (52) for detecting the human drive power applied to the pedal load unit, a vehicle speed sensor (54) for detecting a vehicle speed and a control unit (56) for controlling the motor drive power, and wherein the output of the crank shaft (27) is electrically connected to the control unit via the pedal load detector (52) and the vehicle speed sensor (54) in parallel to control the motor drive power in accordance with the human drive power, thereby assisting the human drive power by the motor drive power within a given power range.

5. The motor drive mechanism as claimed in any one of the preceding claims, wherein the glass fiber material added to the synthetic resin material is 8 mm or more in length.

6. The motor drive mechanism as claimed in claim 5, wherein said glass fibers are aligned in parallel to a widthwise direction of each tooth surface (72) of the gear.

7. The motor drive mechanism as claimed in any one of the preceding claims, wherein said glass fibers are aligned in parallel to each tooth surface of the produced gear.

8. The motor drive mechanism as claimed in any one of the preceding claims, wherein the synthetic resin material is 2 to 3 mm in length, and the additive amount of the glass fiber is limited within a range of 30 to 35 % in weight.

## Patentansprüche

1. Motorantriebsmechanismus (1) mit einem Untersetzungsgetriebe (40) in Kombination mit einem Motor (30) zur Verwendung in einem Fahrzeug, das von einer Motorantriebsleistung des Motors (30) unterstützt wird, wobei die Motorantriebsleistung einer menschlichen Antriebsleitung hinzugefügt wird, um eine menschliche Leistung zu unterstützen, wobei der Motor (30) eine Motorleistungabtriebswelle (31) mit einem ersten Gang (32) aufweist, der integral darin gebildet ist, und
das Untersetzungsgetriebe (40) eine erste gemeinsame Welle (20), die gemeinsam einen zweiten Gang (21) und einen dritten Gang (22) aufweist, und eine zweite gemeinsame Welle (24), die gemeinsam einen vierten Gang (23) und einen fünften Gang (25) aufweist, wobei der zweite Gang (21) mit dem fünften Gang (32) im Eingriff steht, während der dritte Gang (22) mit dem vierten Gang (23) im Eingriff steht,
**dadurch gekennzeichnet, dass** wenigstens einer der zweiten und vierten Gänge (21, 23) aus einem Kunstharzzusammensetzungsmaterial hergestellt ist, welches mit einem Glasfasermaterial versetzt ist, wobei der Menge des Zusatzes von Glasfaser in einem Bereich von 30 bis 55 Gewichts-% liegt.

2. Motorantriebsmechanismus nach Anspruch 1, der für eine Verbindung in einem Fahrzeug angepasst ist, das durch die Motorantriebsleistung unterstützt wird, welche in Übereinstimmung mit der menschlichen Antriebsleistung verändert wird, um dabei die menschliche Antriebsleistung innerhalb eines gegebenen Leistungsbereichs zu unterstützen.

3. Motorantriebsmechanismus nach Anspruch 1 oder 2, der ferner einen Antriebsmechanismus (10) für menschliche Leistung zum Übertragen der menschlichen Antriebsleistung und einen Motorantriebsmechanismus (1) zum Übertragen der Motorantriebsleistung auf das Zielrad aufweist.

4. Motorantriebsmechanismus nach Anspruch 3, wobei der Antriebsmechanismus (10) für menschliche Leistung eine Pedalkrafteinheit (15) und eine Kurbelwelle (17) aufweist, während der Motorantriebsmechanismus (1) ferner einen Pedalkraftdetektor (52) zum Detektieren der menschlichen Antriebsleistung, die auf die Pedalkrafteinheit angewendet wird, einen Fahrzeuggeschwindigkeitssensor (54) zum Detektieren einer Fahrzeuggeschwindigkeit und eine Steuereinheit (56) zum Steuern der Motorantriebsleistung aufweist, und wobei der Ausgang der Kurbelwelle (27) elektrisch mit der Steuereinheit über den Pedalkraftdetektor (52) und den Fahrzeuggeschwindigkeitssensor (54) parallel verbunden ist, um die Motorantriebsleistung in Übereinstimmung mit der menschlichen Antriebsleistung zu steuern, wobei die menschliche Antriebsleistung von der Motorantriebsleistung innerhalb eines gegebenen Leistungsbereichs unterstützt wird.

5. Motorantriebsmechanismus nach einem der vorhergehenden Ansprüche, wobei das Glasfasermaterial, das dem Kunstharzmaterial hinzugefügt wurde, 8mm oder mehr lang ist.

6. Motorantriebsmechanismus nach Anspruch 5, wobei die Glasfasern parallel zu einer der Breite nach ausgerichteten Richtung von jeder Zahnoberfläche (72) des Ganges ausgerichtet sind.

7. Motorantriebsmechanismus nach einem der vorhergehenden Ansprüche, wobei die Glasfasern parallel zu jeder Zahnoberfläche des erzeugten Ganges ausgerichtet sind.

8. Motorantriebsmechanismus nach einem der vorhergehenden Ansprüche, wobei die Länge des Kunstharzmaterials 2 bis 3mm beträgt und die Menge des Zusatzes von Glasfaser auf einen Bereich von 30 bis 35 Gewichts-% beschränkt ist.

## Revendications

1. Mécanisme d'entraînement par moteur (1) comportant un dispositif de réduction (40) en combinaison avec un moteur (30) pour utilisation dans un véhicule assisté par une puissance d'entraînement par moteur du moteur (30) dans lequel la puissance d'entraînement par moteur est ajoutée à une puissance d'entraînement humaine pour assister la puissance humaine, dans lequel
ledit moteur (30) comprend un arbre de sortie de puissance moteur (31) comportant une première roue d'engrenage (32) solidairement formée sur celui-ci, et
ledit mécanisme de réduction (40) comporte un premier arbre commun (20) comportant une deuxième roue d'engrenage (21) et une troisième roue d'engrenage (22) en commun, et un deuxième arbre commun (24) comportant une quatrième roue d'engrenage (23) et une cinquième roue d'engrenage (25) en commun, dans lequel ladite deuxième roue d'engrenage (21) se met en prise avec la première roue d'engrenage (32) alors que la troisième roue d'engrenage (22) se met en prise avec la quatrième roue d'engrenage (23),
**caractérisé en ce qu'**au moins l'une parmi les première et quatrième roues d'engrenage (21, 23) est composée d'un matériau composite de résine de synthèse qui est ajouté à un matériau de fibre de verre dans lequel une quantité additive de fibre de verre se situe à l'intérieur d'une plage de 30 à 55% en poids.

2. Mécanisme d'entraînement par moteur selon la revendication 1, qui est adapté pour utilisation dans un véhicule assisté par la puissance d'entraînement pat moteur qui varie selon la puissance d'entraînement humaine pour de ce fait assister la puissance d'entraînement humaine à l'intérieur d'une plage de puissance donnée.

3. Mécanisme d'entraînement par moteur selon la revendication 1 ou 2,
comprenant de plus un mécanisme d'entraînement par puissance humaine (10) destiné à transmettre la puissance d'entraînement humaine et un mécanisme d'entraînement par moteur (1) destiné à transmettre la puissance d'entraînement par moteur à la roue cible.

4. Mécanisme d'entraînement par moteur selon la revendication 3, dans lequel ledit mécanisme d'entraînement par puissance humaine (10) comprend une unité de charge de pédale (15) et un vilebrequin (17) alors que ledit mécanisme d'entraînement par moteur (1) comprend de plus un détecteur de charge de pédale (52) destiné à détecter la puissance d'entraînement humaine appliquée à l'unité de charge de pédale, un capteur de vitesse de véhicule (54) destiné à détecter une vitesse du véhicule et une unité de commande (56) destinée à commander la puissance d'entraînement par moteur, et dans lequel la sortie du vilebrequin (17) est électriquement connectée à l'unité de commande via le détecteur de charge de pédale (52) et le capteur de vitesse de véhicule (54) en parallèle pour commander la puissance d'entraînement par moteur selon la puissance d'entraînement humaine, assistant de ce fait la puissance d'entraînement humaine par la puissance d'entraînement par moteur à l'intérieur d'une plage de puissance donnée.

5. Mécanisme d'entraînement par moteur selon l'une quelconque des revendications précédentes, dans lequel le matériau de fibre de verre ajouté au matériau de résine synthétique est d'une longueur de 8 mm ou plus.

6. Mécanisme d'entraînement par moteur selon la revendication 5, dans lequel lesdites fibres de verre sont alignées en parallèle par rapport au sens de la largeur de chaque surface dentée (72) de la roue d'engrenage.

7. Mécanisme d'entraînement par moteur selon l'une quelconque des revendications précédentes, dans lequel lesdites fibres de verre sont alignées en parallèle par rapport à chaque surface dentée de la roue d'engrenage produite.

8. Mécanisme d'entraînement par moteur selon l'une quelconque des revendications précédentes, dans lequel le matériau de résine synthétique est d'une longueur de 2 à 3 mm, et la quantité additive de fibre de verre est limitée à l'intérieur d'une plage de 30 à 55% en poids.
